# EUROPÄISCHE PATENTANMELDUNG

(11) **EP 1 621 062 A1**
(43) Veröffentlichungstag der Anmeldung: **01.02.2006**
(21) Anmeldenummer: 04018139.8
(22) Anmeldetag: 30.07.2004
(51) Int. Cl.: A01D 45/26

(54) **Vorrichtung zum Ernten von Feldgemüse**

(71) Anmelder: Fritz Marschall Agrarsysteme GmbH, 80539 München (DE)
(72) Erfinder: Marschall, Fritz, 80539 München (DE)
(74) Vertreter: Grünecker, Kinkeldey, Stockmair & Schwanhäusser Anwaltssozietät

(57) **Zusammenfassung**

Die Erfindung betrifft eine Vorrichtung zum Ernten von Feldgemüse, insbesondere Salat, bei dem mit einem Messer das Feldgemüse, das sich in einer Emteposition befindet, abgeschnitten werden kann, wobei das Messer auf einer Kurvenbahn bis zu einer Stelle unterhalb der Ernteposition geführt werden kann. Mit dem Messer als Tragelement, kann das geerntete Feldgemüse mit der Vorrichtung aus dem Feld gehoben und an einem Übergabepunkt abgelegt werden.

## Beschreibung

Die Erfindung betrifft eine Vorrichtung zum Ernten von Feldgemüse, insbesondere Salat, bei dem mit einem Messer das Feldgemüse, das sich in einer Ernteposition befindet, abgeschnitten werden kann.

Aus der WO 97/42805 ist ein Ernter für kleine Salatköpfe offenbart, bei dem ein horizontal liegendes Messer die Salatköpfe dicht über dem Boden abschneidet. Das Messer erstreckt sich über die gesamte Arbeitsbreite der Maschine.

Nachteilig ist hierbei, dass das Messer bei Erdunebenheiten in die Erde schneidet und beschädigt werden kann. Weiterhin ist eine maschinelle Aufnahme der abgeschnittenen Salatköpfe unerlässlich, da sich Personen auf Grund der zu großen Unfallgefahr nicht im Bereich des Schneidmessers aufhalten können.

Weiterhin müssen die abgeschnitten Salate unmittelbar von dem Messer entfernt werden, damit sie nicht vor das Messer fallen und von diesem zerschnitten werden.

Nachteilig ist hierbei auch, dass sämtlicher Salat abgeschnitten wird und keine Auswahl möglich ist, bei der beispielsweise schlecht gewachsener Salat nicht abgeschnitten wird.

Die Aufgabe der vorliegenden Erfindung besteht daher darin, eine Vorrichtung zum Ernten von Feldgemüse zu verbessern.

Die Aufgabe wird gelöst durch eine Vorrichtung nach Anspruch 1.

Bei der Vorrichtung wird ein Messer auf einer Kurvenbahn bis zu einer Stelle unterhalb der Ernteposition eines über dem Boden wachsenden Feldgemüses geführt. Durch das Führen des Messers unterhalb der Ernteposition wird das Feldgemüse mit dem Messer von seinen Wurzeln abgeschnitten. Dadurch, dass es auf einer Kurvenbahn geführt wird, ist es möglich, das Messer an die Stelle unterhalb der Ernteposition zu führen, ohne dass seitlich des Feldgemüses stehendes Feldgemüse beeinträchtigt würde. Somit kann beispielsweise selektiv nur das gut gewachsene Feldgemüse geerntet werde und das übrige stehen gelassen werden.

Vorteilhafterweise beginnt die Kurvenbahn seitlich der Ernteposition, sodass sich das Messer am Beginn der Kurvenbahn zwischen zwei Feldgemüsen befinden kann.

Vorteilhaft ist weiterhin eine Ausführungsform bei der ein Ring die Ernteposition umgibt. Der Ring dient zum Einen dazu, das Feldgemüse beim Abschneiden und auch danach in seiner Position zu fixieren, kann andererseits auch dazu verwendet werden, die äußeren Blätter des Feldgemüses, die nicht an dem Feldgemüse bleiben sollen, nach unten zu drücken, um so den Schnitt durch das Messer zwischen den abzutrennenden Blättern und dem Feldgemüse durchzuführen.

Vorzugsweise besteht der Ring aus zwei Ringelementen, die vorzugsweise parallel sind, sodass das untere Ringelement zum Niederdrücken der Blätter ausgebildet ist und das obere zum Halten des Feldgemüses.

Besonders vorteilhaft ist weiterhin eine Ausführungsform, bei der das Messer zusätzlich eine Auflagefläche aufweist, mit der das Feldgemüse nach dem Abschneiden in der Ernteposition gehalten werden kann. Die Auflagefläche ist hierbei vorteilhafterweise so ausgebildet, dass sie ein Herausfallen des Feldgemüses aus dem Ring nach dem Abschneiden verhindert. Zusätzlich kann weiterhin ein Haltering vorgesehen sein, der weiter oben angeordnet ist, und so ein Herauskippen des Feldgemüses aus der Vorrichtung nach dem Abschneiden verhindert. Dies ist insbesondere bei länglich wachsenden Produkten, wie Römersalat oder Staudensellerie, interessant. Durch die Ausbildung des Messers mit einer Auflagefläche kann das Messer das Gemüse solange halten, bis es an einem gewünschten Übergabepunkt abgelegt werden kann.

Die Vorrichtung weist vorteilhafterweise ein elektrisches, pneumatisches, hydraulisches, magnetisches oder manuelles oder sonstartiges Betätigungsmittel auf, mit dem das Messer an die Stelle unterhalb der Ernteposition bewegt werden kann. Dadurch ist ein automatisches bzw. halbautomatisches Ernten möglich.

Vorteilhafterweise ist das Messer an einem Schwenkhebel befestigt und das Betätigungsmittel greift am Schwenkhebel oder einem damit verbundenen Element an.

Besonders vorteilhaft ist eine Ausführungsform, bei der die Vorrichtung gegen den Boden gedrückt werden kann und durch das Drücken der Vorrichtung auf den Boden eine Relativbewegung zwischen einer Auflagevorrichtung, die auf dem Boden aufliegt und einem sonstigen Bauteil der Vorrichtung stattfindet und diese Relativbewegung in eine Bewegung des Messers umgesetzt wird, sodass durch das Aufdrücken der Vorrichtung auf den Boden automatisch auch das Abschneiden des Feldgemüses stattfindet.

Bevorzugte Ausführungsformen der Vorrichtung sind in den beiliegenden Figuren erläutert. Dabei zeigt:
- Figur 1: eine dreidimensionale schematische Darstellung der Vorrichtung;
- Figur 2a: eine schematische Seitenansicht;
- Figur 2b: eine schematische Seitenansicht in einer anderen Stellung des Messers;
- Figur 3: eine dreidimensionale schematische Darstellung einer weiteren Ausführungsform;
- Figur 4: eine dreidimensionale schematische Darstellung einer anderen Ausführungsform.

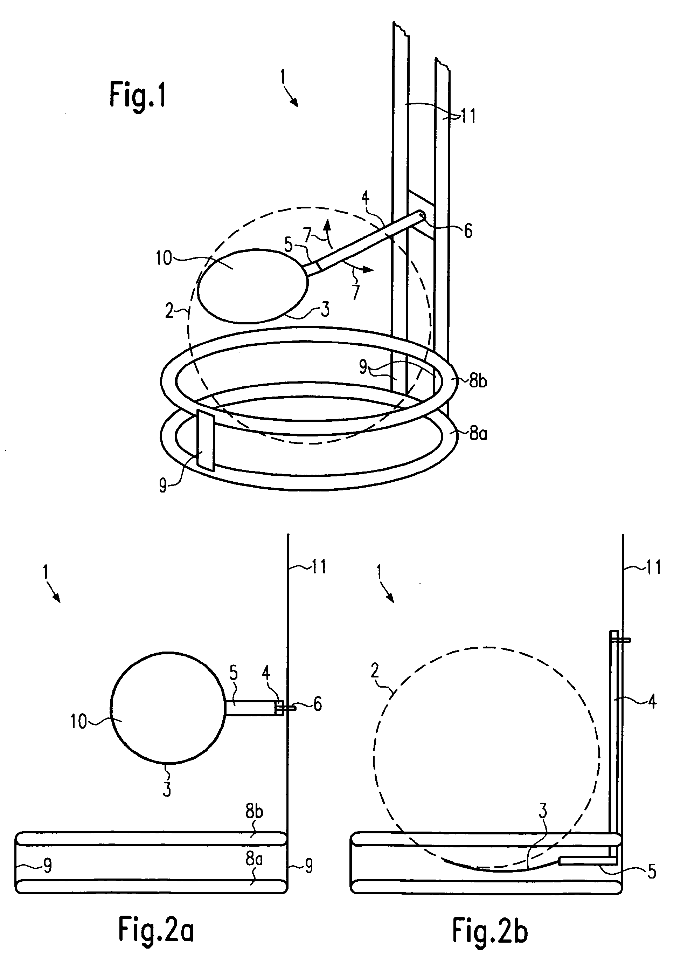

In Figur 1 ist eine Vorrichtung zum Ernten von Feldgemüse gezeigt. Die Ernteposition 2 ist gestrichelt dargestellt. In dieser Position befindet sich das zu erntende Feldgemüse. Die Vorrichtung 1 kann hierzu beispielsweise vorher über das Feldgemüse 2 von oben gestülpt worden sein. Dabei kann der Ring 8a (s.u.) äußere, unansehnliche Blätter des Feldgemüses nach untern drücken, so dass diese nicht mit abgeschnitten werden, sondern vielmehr auf dem Boden verbleiben.

Die Vorrichtung weist ein Messer 3 auf, das an einem Schwenkhebel 4 über ein Verbindungselement 5 angeordnet ist. Der Schwenkhebel 4 ist an einer Schwenkachse 6 schwenkbar gelagert. Durch Schwenken des Schwenkhebels 4 in Richtung 7 um die Schwenkachse 6 kann das Messer 3 von einer Stelle seitlich der Ernteposition 2 in eine Stelle unterhalb der Ernteposition 2 bewegt werden.

Die Vorrichtung 1 weist zwei Ringe 8a und 8b auf, die parallel zueinander und beabstandet voneinander angeordnet sind. Die beiden Ringe 8a und 8b sind durch Abstandshalter 9 miteinander verbunden.

Das Messer 3 ist so ausgebildet, dass es eine Auflagefläche 10 umfasst. Die Auflagefläche 10 kann das abgeschnittene Feldgemüse so aufnehmen, dass es nicht aus dem Ring 8a, 8b nach unten herausfällt. Es besteht dann weiter die Möglichkeit, die gesamte Vorrichtung mit dem auf der Ablagefläche ruhenden Feldgemüse durch ein elektrisches, pneumatisches, hydraulisches, magnetisches oder auch manuell betätigbares Fördermittel vertikal anzuheben und ggf. durch eine horizontale Verschwenkung über eine gewünschte Ablagestelle (Übergabepunkt) zu bewegen. Nach der Ablage kann die Vorrichtung durch das Fördermittel, z.B. einem mit Bilderkennung gesteuerten Roboter, über die nächste Ernteposition abgesenkt werden.

In Figur 2 a ist eine Seitenansicht der Vorrichtung 1 aus Figur 1 gezeigt. Hierbei ist das Messer 3 in einer Position seitlich der Ernteposition 2 dargestellt. Der Schwenkhebel 4 ist horizontal angeordnet.

In Figur 2 b ist ein Zustand gezeigt, bei dem das Messer 3 an einer Stelle unterhalb der Ernteposition 2 liegt. Der Schwenkhebel 4 ist senkrecht nach unten orientiert.

Bei der Vorrichtung aus den Figuren 1 und 2 kann der Schwenkhebel 4 mit jedem beliebigen Betätigungsmittel gekoppelt sein, um so ein automatisches, halbautomatisches oder manuelles Verschwenken des Messers 3 zu ermöglichen. Ein Hydraulik- oder Pneumatikzylinder kann beispielsweise etwa parallel oder leicht schräg zu den Haltevorrichtungen 11 angeordnet und mit dem Schwenkhebel 4 oder einen damit verbundenen Element in entsprechender Weise verbunden sein.

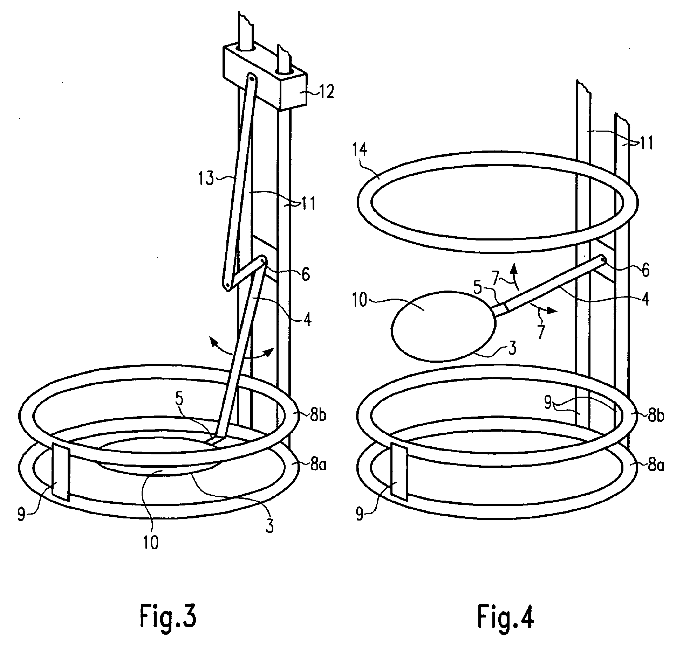

In Figur 3 ist eine weitere Ausführungsform gezeigt, bei der ein Schieber 12 bewegbar gegenüber den Haltevorrichtungen 11 angeordnet ist. Durch ein Herunterschieben des Schiebers 12 wird die Stange 13 nach unten bewegt, die über einen Hebel an den Schwenkhebel 4 angreift und so das Messer 3 in die untere Position bewegt. Umgekehrt wird durch ein Anheben des Schiebers 12 die Stange 13 ebenfalls nach oben gezogen, wodurch der Schwenkhebel 4 mit dem Messer 3 in eine seitliche Position verschwenkt wird.

Durch entsprechende Anschläge für eines oder mehrere der bewegten Teil kann die Bewegung begrenzt werden.

Wird die Vorrichtung, wie sie in Figur 3 gezeigt ist, am Schieber 12 gehalten, so rutscht die Haltevorrichtung 11 im Vergleich zu dem Schieber 12 nach unten, wodurch das Messer 3 in eine seitliche Position gebracht wird. Wird die Vorrichtung insgesamt dann auf dem Boden abgesetzt, so kommt der Ring 8a mit dem Boden zur Anlage. Wird die Aufhängung des Schiebers 12 zusammen mit dem Schieber 12 dann weiter nach unten bewegt, kommt es zur Verschwenkung des Messers 3 in eine untere Position, wie sie in Figur 3 dargestellt ist.

Vorteilhafterweise kann das Messer 3, der Schwenkhebel 4, die Stange 13 oder der Schieber 12 oder ein sonstiges hiermit verbundenes Bauteil so lösbar arretiert werden, dass das Messer 3 in der unteren Position (wie in Figur 3 dargestellt) verbleibt. Dies hat den Vorteil, dass nach dem Abschneiden des Feldgemüses das Feldgemüse auf der Auflagefläche 10 liegen bleiben und nicht nach unten durch den Ring 8 herausfallen kann. Die Arretierung ist deshalb vorzugsweise lösbar, damit an einer gewünschten Stelle, beispielsweise über einem Ausgabepunkt das Messer 3 mit der Auflagefläche 10, doch in eine seitliche Position gebracht werden kann, sodass das Feldgemüse dann nach unten herausfällt.

In Figur 4 ist eine weitere Ausführungsform gezeigt, bei der im Vergleich zu Figur 1 ein Haltering 14 angeordnet ist. Dieser befindet sich oberhalb der Schwenkachse 6. Mit dem Haltering 14 kann auch hochwachsendes Feldgemüse, wie Römersalat oder Staudensellerie, geerntet werden, wobei der Haltering 14 dann ein Herausfallen des Feldgemüses über den oberen Rand des Rings 8b hinweg verhindert.

## Patentansprüche

1. Vorrichtung zum Ernten von Feldgemüse, insbesondere Salat, bei dem mit einem Messer das Feldgemüse, das sich in einer Ernteposition befindet, abgeschnitten werden kann
**dadurch gekennzeichnet, dass**
das Messer (3) auf einer Kurvenbahn bis zu einer Stelle unterhalb der Ernteposition (2) geführt werden kann.

2. Vorrichtung nach Anspruch 1, **dadurch gekennzeichnet, dass** die Kurvenbahn seitlich der Ernteposition (2) beginnt.

3. Vorrichtung nach einem der Ansprüche 1 oder 2, **dadurch gekennzeichnet, dass** ein Ring (8a, 8b) die Ernteposition (2) umgibt.

4. Vorrichtung nach Anspruch 3, **dadurch gekennzeichnet, dass** der Ring aus mindestens zwei Ringelementen (8a, 8b) besteht, die vorzugsweise parallel sind.

5. Vorrichtung nach einem der Ansprüche 1 bis 4, **dadurch gekennzeichnet, dass** ein Haltering (14) zum Halten des Feldgemüses in der Ernteposition (2) vorgesehen ist.

6. Vorrichtung nach einem der Ansprüche 1 bis 5, **dadurch gekennzeichnet, dass** das Messer (3) eine Auflagefläche (10) aufweist, auf der das Feldgemüse in der Ernteposition (2) liegen kann.

7. Vorrichtung nach einem der Ansprüche 1 bis 6, **dadurch gekennzeichnet, dass** elektrische, pneumatische, hydraulische, magnetische oder manuelle Betätigungsmittel für das Messer vorgesehen sind, mit denen das Messer (3) an die Stelle unterhalb der Ernteposition (2) bewegt werden kann.

8. Vorrichtung nach einem der Ansprüche 1 bis 7, **dadurch gekennzeichnet, dass** das Messer (3) an einem Schwenkhebel (4) befestigt ist.

9. Vorrichtung nach Anspruch 8 soweit auf Anspruch 7 zurückbezogen, **dadurch gekennzeichnet, dass** das Betätigungsmittel an den Schwenkhebel (4) oder einem damit verbundenen Element angreift.

10. Vorrichtung nach einem der Ansprüche 8 oder 9, **gekennzeichnet durch** eine Auflagevorrichtung (8a), die auf dem Boden aufliegen kann und mit der eine Schwenkachse (6) des Schwenkhebels (4) fest verbunden ist und wobei das Betätigungsmittel ein Verbindungselement (13) umfasst, dass den Schwenkhebel (4) mit einem Schieber (12) verbindet, der gegenüber der Auflagevorrichtung (8a) bewegbar ist.

11. Vorrichtung nach Anspruch 10, **dadurch gekennzeichnet, dass** bei Aufdrücken der Vorrichtung an dem Schieber (12) auf den Boden eine Relativbewegung zwischen Schieber (12) und Auflagevorrichtung (8a) ausgelöst wird, die zu einer Bewegung des Messers (3) an die Stelle unterhalb der Ernteposition (2) führt.

12. Vorrichtung nach einem der Ansprüche 10 oder 11, **dadurch gekennzeichnet, dass** das Messer (3) an der Stelle unterhalb der Ernteposition (2) lösbar arretiert werden kann.
